(19)

Europäisches
Patentamt
European
Patent Office
Office européen
des brevets

(11) **EP 1 835 654 A1**

(12) **EUROPEAN PATENT APPLICATION**

(43) Date of publication:
**19.09.2007 Bulletin 2007/38**

(51) Int Cl.:
***H04L 9/08*** (2006.01)

(21) Application number: **07102778.3**

(22) Date of filing: **21.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.02.2006 KR 20060019536**

(71) Applicant: **SAMSUNG ELECTRONICS CO., LTD. Suwon-si,
Gyeonggi-do 442-742 (KR)**

(72) Inventor: **Kim, Hyoung-shick
Seodaemun-gu
Seoul (KR)**

(74) Representative: **Perkins, Dawn Elizabeth et al
Venner Shipley LLP
20 Little Britain
London EC1A 7DH (GB)**

(54) **Method and apparatus for configuring key of groups contained in domain**

(57)  Provided is a method and apparatus for configuring keys of groups contained in a domain. The method includes generating a common key and N distribution keys according to the number (N) of users who join a domain, transmitting the common key to users' devices, and transmitting N-1 distribution keys of N different distributions keys to the users' devices, wherein a set of the N-1 distribution keys received by the user's device is different from a set of the N-1 distribution keys received by devices of other users who join the domain.

EP 1 835 654 A1

**Description**

Methods and apparatuses consistent with the present invention relate to distributing an encoding key and, more particularly, to a method and apparatus for configuring keys of groups contained in a domain.

Conventional encoding systems are based on key security. Accordingly, technologies that can efficiently and safely manage keys are increasingly important.

A group refers to a set of users or devices that are defined for the same purpose. Usually, the group shares information called a "group key", and shares resources using the group key.

However, there is a problem in that a user has to manage all keys corresponding to each group if the user is a member of more than one group. When the number of users is N, the number of subsets may be as many as $2^N-1$ (worst case). In this case, an individual may have to manage $2^N-1$ keys.

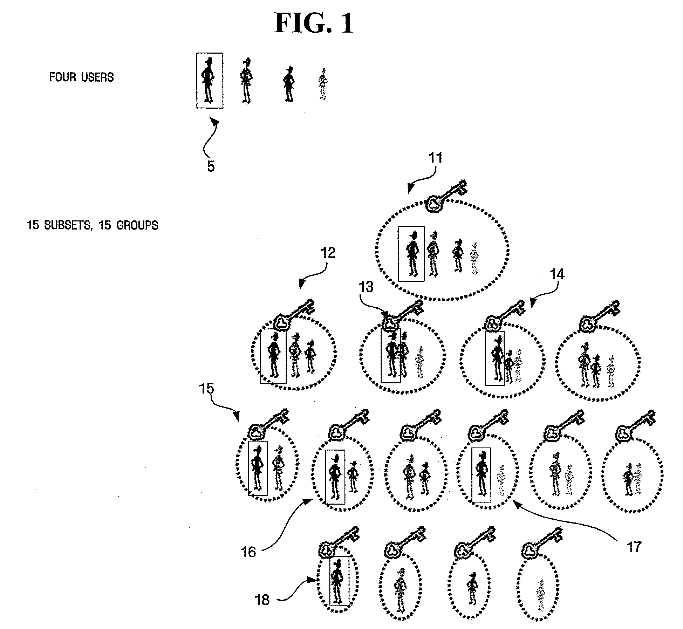

Figure 1 depicts a conventional key distribution. In the conventional art, different keys are used for each group. If there are four users, there are a maximum of 15 subgroups. Accordingly, 15 group keys are required. In general, if there are N users, $2^N-1$ group keys are required. A user 5 is included in eight groups 11, 12, 13, 14, 15, 16, 17, and 18. Therefore, a device of the user 5 must have a maximum of eight keys.

The conventional art provides for an encoding part and a decoding part, when resources are encoded or decoded, so that only group members may use the corresponding group keys. Each user must have eight ($2^3$) keys, which is described by encoding and decoding resources $r$. If resources $r$ are encoded, when it is desired to share resources $r$ in only a specific group G, an encoding group key ($G_{K1}$) of the group G is selected and the resource r is encoded, which is Enc{r}\_$G_{K1}$. If resources $r$ is decoded, in order to decode Enc{r}\_$G_{K1}$, the resources $r$ is decoded through a decoding algorithm using a decoding group key ($G_{K2}$). If a public key is used in the conventional art, an encoding key ($G_{K1}$) and a decoding key ($G_{K2}$) of the group are different. If a symmetrical key is used in the conventional art, $G_{K1}$ and $G_{K2}$ are same.

If a user is a member of more than one group, the user has to manage all keys corresponding to each group, which is a problem. When the number of users is N, the number of subsets may be as many as $2^N-1$ (worst case). In this case, an individual may have to manage $2^N-1$ keys. If a new user joins a domain after keys are distributed to groups in the domain, there is a problem in that all keys must be redistributed.

In view of the above, it is an aspect of the present invention to efficiently manage keys by reducing the number of keys which, in the conventional art, increases exponentially according to the number of groups contained in a domain.

It is another aspect of the present invention to use a previously used key even if a new user joins a group after keys are distributed.

This and other aspect and features of the present invention will become clear to those skilled in the art upon review of the following description, attached drawings and appended claims.

According to an aspect of the present invention, there is provided a method of configuring keys of groups contained in a domain, the method including generating a common key and N distribution keys according to the number (N) of users who join a domain, transmitting the common key to user devices, and transmitting N-1 distribution keys of N different distributions keys to the user devices, in which the set of N-1 distribution keys received by the user device is different from the set of the N-1 distribution keys received by other user devices of users who join the domain.

According to another aspect of the present invention, there is provided a method of configuring keys of groups contained in a domain, the method including receiving a common key and N-1 distribution keys from a server managing a domain by joining the domain, receiving information on users who are contained in a first group having access right in the domain, and generating a decoding key based on the common key and the distribution keys, except for distribution keys corresponding to other users contained in the first group, of N-1 distribution keys, in which the number of users who join the domain is N.

According to another aspect of the present invention, there is provided an apparatus including a key-generating unit that generates a common key and N distribution keys according to the number (N) of users who join a domain, a key distributor that transmits the common key and N-1 distribution keys of the N distribution keys to the user's device, and then distributes keys so that the set of N-1 distribution keys received by the user's device is different from the set of N-1 distribution keys received by devices of other users who join the domain, and an encoder that calculates an encoding key corresponding to a decoding key containing the common key and distribution keys based on information of users contained in a group in the domain in order to encode resources using the encoding key.

Preferably, the method comprises receiving a signal notifying that a first user has joined the domain, generating a first distribution key that does not overlap with the N-1 distribution keys when the first user joins the domain, transmitting the first distribution key to another user in the domain and transmitting the common key and a subset of the N distribution keys to the first user, wherein the subset of N distribution keys does not include the first distribution key.

The above and other features and aspects of the present invention will become apparent by describing in detail exemplary embodiments thereof with reference to the attached drawings, in which:

Figure 1 depicts a conventional art key distribution;

Figure 2 illustrates a case where a key relation between groups is set according to an exemplary embodiment of the present invention;

Figure 3 is a view showing elements consistent with the present invention;

Figure 4 depicts keys distributed to four users;

Figure 5 is a view showing the process of Figure 4 of generating a key of a group including a first user 301 and a second user 304;

Figure 6 is a view showing that only group keys of groups that legally include devices can be calculated according to an exemplary embodiment of the present invention;

Figure 7 illustrates a process of maintaining group security without restructuring all group keys when users are actively added, according to an exemplary embodiment of the present invention;

Figure 8 illustrates a process of generating and distributing keys, and encoding data using the distributed keys, and transmitting the encoded data according to an exemplary embodiment of the present invention.

Features and aspects of the present invention, and methods of accomplishing the same, may be understood more readily by reference to the following detailed description of exemplary embodiments and the accompanying drawings. The aspects of the present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims.

The present invention is described hereinafter with reference to flowchart illustrations of user interfaces, methods, and computer program products according to exemplary embodiments of the invention. It should be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded into a computer or other programmable data processing apparatus to cause a series of operational steps to be performed in the computer or other programmable apparatus to produce a computer implemented process such that the instructions that execute in the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in reverse order, depending upon the functionality involved.

In the present invention, if groups configuring a domain form layers with a correlation, it is possible to efficiently manage keys by giving a correlation to group keys. Also, by using the correlation between keys, a user can actively generate keys of a group where the user is contained, as necessary.

In the present invention, a user is not limited to meaning one person. If several people have an identical right, several people may be contained in a single user concept. Also it is possible that one person has different rights with several user IDs.

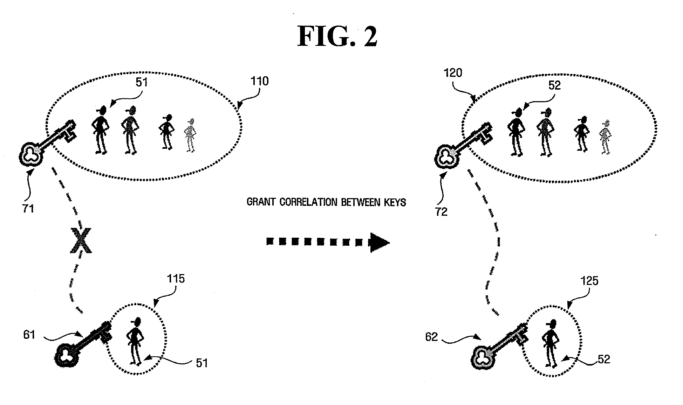

Figure 2 illustrates a case where a key relation between groups is set according to an exemplary embodiment of the present invention. In a conventional case of Figure 2, a user A 51 is contained in a group 110 and a group 115. However, there is no correlation between a key 61 of the group 115 containing only a conventional user A 51 and a key 71 of the group 110 containing A 51 and other users. Accordingly, all keys of the two groups are stored in a device of A 51. In a case according to an exemplary embodiment of the present invention, a correlation is set between a key 62 of the group 125 containing only a user A 52 and a key 72 of the group 120 containing A 52 and other users. Therefore, correlated keys are stored in user A's device 52.

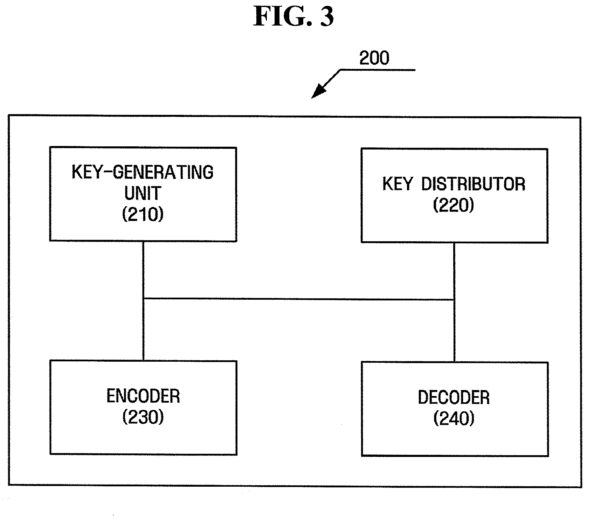

Figure 3 is a view showing elements of the present invention.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to execute in one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules, or further separated into additional components and modules.

A server 200 manages a domain in which several users compose several groups, which may include a server: of a home network, in an office, or that manages a virtual private network or a logical function of web service. The server provides a server function of a system, in which the limited users join, that differently allows the users to use resources, and generates and distributes keys to be used by groups in the domain.

The server 200 includes a key-generating unit 210, a key distributor 220, an encoder 230, and a decoder 240. The key-generating unit 210 generates a key according to a correlation between groups. The key distributor 220 transmits the generated key to each group or a device of each user contained in each group. The encoder 230 encodes resources. The decoder 240 decodes resources. The resource includes data such as multimedia content and documents, which is shared in groups. The server 200 may use both a public key encryption and a symmetrical key encryption.

The notation used herein is as follows.

U refers to a universal set including all users. If there are N users, the set includes all N users. S refers to subsets of U. If there are N users, $2^N-1$ subsets may exist.

Enc {M}_K refers to a function that encodes M using a key K. And, f:(0,1)'→(0,1)' performs a pseudorandom permutation. The notation f·g( ) is the same as f( ) ·g( ).

($K_{SPU}$, $K_{SPI}$) is a pair of keys of a group or subset S. $K_{SPU}$ is a public key and $K_{SPI}$ is a secret key.

It is assumed that N users have IDs 1 through N. When generating encoding and decoding keys, the server 200 selects $f_1()$, $f_2( )$, ..., $f_N( )$, i.e., N pseudofunctions that satisfy fi(x)·fj(y) = fj(y)·fi(x) transmitting keys to N users. As a distribution key, the function is respectively transmitted to each user. That is, users in a domain receive a part of the distribution keys. The server selects a common key $K_U$, which is common to all users' devices, as a common key of the universal set U.

The server 200 generates and distributes a decoding key using the generated functions and $K_U$. That is, the server transmits N keys to each user i, and distributes $K_U$, $f_1( )$, $f_2( )$, ... , $f_{i-1}( )$, $f_{i+1}( )$, ... $f_N( )$. The server encodes resources into an encoding key of the corresponding group S. In a process of encoding resources as an asymmetrical key, a public key and a secrete key are required.

A pair having a public key and a secret key is marked as {$K_{SPU}$, $K_{SPR}$}. A process of obtaining each value is the same as follows.

$K_{SPR}= f_{ei}\bullet ...(K_U)$. All ei ∈ U- S. $K_{SPU}$ corresponds to $K_{SPR}$.

When *r* refers to resources to be encoded, the encoding method is Enc {*r*}_$K_{SPU}$.

To decode the encoded resources *r* as a decoding key of the corresponding group S, the following is performed.

A user X of S calculates $K_{SPR}$ as follows.

$$K_{SPR} = f_{ei}\bullet \ldots(K_U).$$

All ei ∈ U- S.

$K_{SPR}$ may be obtained because the user X has $K_U$ and $f_{ei}$ corresponding to ei ∈ U- S. The server decodes Enc {*r*}_$K_{SPU}$ using $k_{SPR}$.

The application of the above-described process to an industrial standard public key algorithm, i.e., the RSA encoding system in a case where four users 301, 302, 303, and 304 join a domain, is now described.

First, p and d (prime number) are obtained. In following Equation 1, n is p·q and functions $f_1()$, $f_2()$, $f_3()$, and $f_4$ () are obtained.

$$f_1(x) = x\bullet f\_1\%\phi[n]$$

$$f_2(x) = x\bullet f\_2\%\phi[n]$$

$$f_3(x) = x\bullet f\_3\%\phi[n] \tag{1}$$

$$f_4(x) = x\bullet f\_4\%\phi[n]$$

In Equation 1, f_1 is the only random number, and is not a divisor of (p-1)(q-1).

If p = 101 and q = 113, n = 11413. $\phi[n]$ = (p-1)(q-1) = 11200. 11200 = $2^6 5^2 7$.

The desired function (distribution key) is as follows.

$$f_1(x) = x \bullet 3\%11200$$

$$f_2(x) = x \bullet 11\%11200$$

$$f_3(x) = x \bullet 13\%11200 \qquad\qquad (2)$$

$$f_4(x) = x \bullet 17\%11200$$

When the common key $K_U$ is randomly selected, $K_U$ selects a number having no a divisor with $\phi[n]$, therefore $K_U$ = 3533.

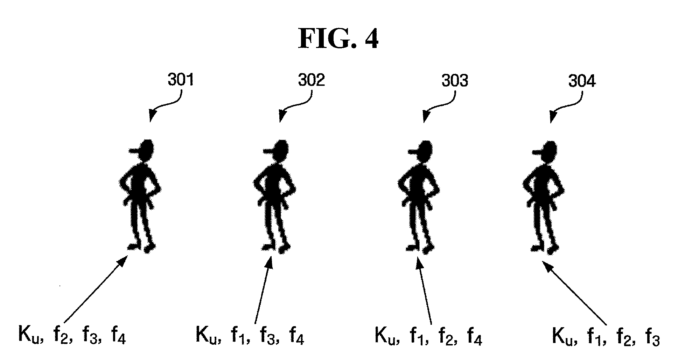

A first user 301 receives $K_U$, $f_2(x)$, $f_3(x)$ and $f_4(x)$, but not $f_1(x)$. Users 302, 303, and 304 receive keys as illustrated in Figure 4. That is, keys for groups including only one user are distributed.

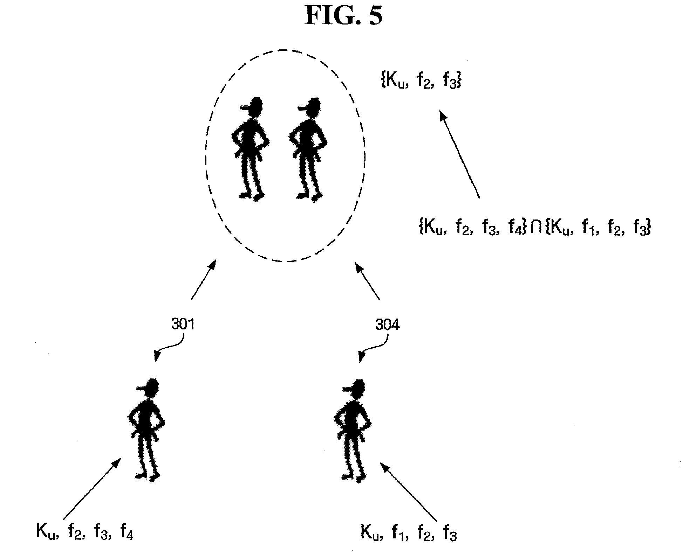

How to generate a group key using the keys distributed to each user is described with reference to Figure 5.

Figure 5 is a view showing a process of generating keys of a group including users 301 and 304 in Figure 4, and encoding and decoding the keys.

A group including the users 301 and 304 may compose a group key using keys $K_U$, $f_2(x)$ and $f_3(x)$. The intersection of two key sets of the users 301 and 304 is a key of the group including the users 301 and 304.

To encode the group key, an encoding key $K_{SPR}$ is calculated. An encoding key including users 301 and 304 is $K_{\{1,4\}PR}$.

$K_{\{1,4\}PR}$ = $f_2 \bullet f_3(K_u)$ = (11•13•3533) % 11200 = 1219. A public key corresponding to $K_{\{1,4\}PR}$ is $K_{\{1,4\}PU}$ and $K_{\{1,4\}PU}$=$1219^{-1}\%11200$ = 3179. Content can be encoded using the public key. If the value of content is 10, the value encoded using $K_{\{1,4\}PU}$ is defined by Equation 3.

$$\mathrm{Enc}\{10\}\_K_{\{1,4\}PU} = 10^{3179}\%11413 \quad (n = 11413) \qquad\qquad (3)$$

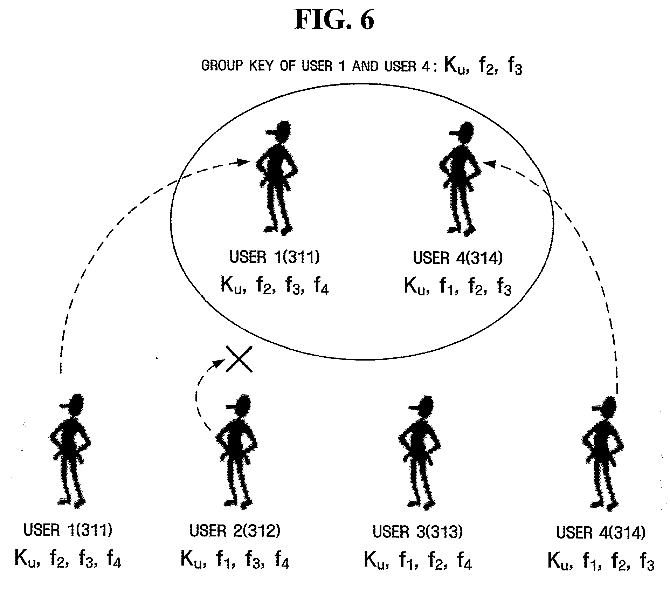

Figure 6 is a view proving that only group keys of groups that legally include devices can be calculated according to an exemplary embodiment of the present invention.

As shown in Figure 4, users 301 through 304 have the common key $K_U$ and the distribution keys $f_1()$, $f_2()$, $f_3()$, and $f_4()$, which are respectively distributed to each user, in order to calculate encoding and decoding keys. A user $i$ has other distribution keys in addition to $f_i()$.

When keys of a group including users 311 and 314 are determined by the user 311, then $f_4()$ which is not contained in a device of the user 314, i.e., not transmitted to a device of the user 314 as a distribution key corresponding to a device of the user 314, is deleted from $K_U$, $f_2()$, $f_3()$, and $f_4()$ are stored in a device of the user 311 in order to obtain keys of a group including users 311 and 314. Similarly, when keys of a group including users 311 and 314 are determined by the user 314, $f_1()$ which is not contained in a device of the user 311, i.e., not transmitted to a device of the user 311 as a distribution key corresponding to a device of the user 311, is deleted from $K_U$, $f_1()$, $f_2()$, and $f_3()$ are stored in a device of the user 314 in order to obtain keys of a group including users 311 and 314.

Since a user 312 cannot know a value of $f_2()$, the user 312 cannot infer keys of the group composed by the users 311 and 314, because the server did not transmit $f_2()$ to a device of the user 312 in the first process of assigning distribution keys. A user 313 also cannot calculate keys because the user 313 cannot know a value of $f_3()$. Accordingly, since a user cannot calculate a key of a group in which the user is not included, the security of groups in a domain can be improved. When the number of practical users is N, the number of distribution keys is N+1. Since a group key is generated using N+1 distribution keys, the maximum number of keys stored in each user's device is N. Compared with that devices receive many loads because the number of keys to-be-stored exponentially increases by $2^{N-1}$ in the conventional art, the number of keys to-be-stored linearly increases by N when the method of the present invention is pursued.

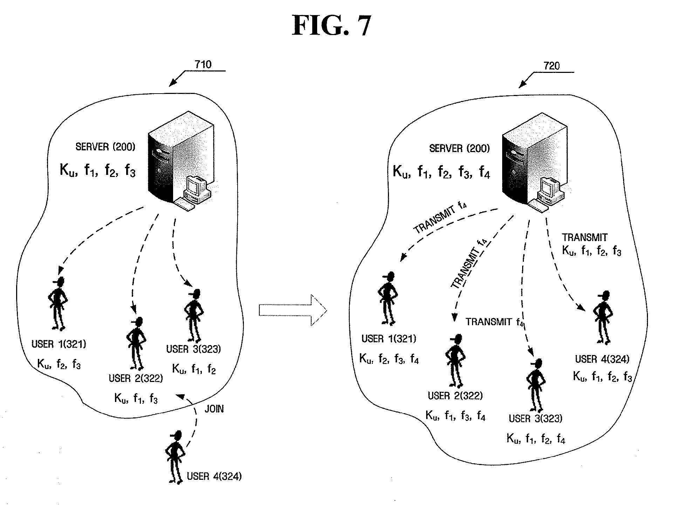

Figure 7 illustrates a process of maintaining a group security without restructuring all group keys when users are actively added, according to an exemplary embodiment of the present invention. In 710 of Figure 7, users 321, 322, and 333 are registered as users of a domain operated by the server 200. The server 200 distributes the common key

$K_U$, $f_1()$, $f_2()$, and $f_3()$ to each user. The users can actively generate or pre-calculate group keys using the assigned common key and the distribution keys, and then store the group keys. When a user 324 joins the group 710, the server 200 calculates $f_4()$ and transmits it to other users 321, 322, and 323 as illustrated in 720 of Figure 7. The server 200 also transmits $K_U$, $f_1()$, $f_2()$, and $f_3()$ to the user 324.

Through the above process, a restructuring of the keys of the composed groups is not necessary even if a new user joins a domain. A group key is actively managed according to a group generation or a group removal, so it is only required that the server maintains information on which users are contained in the corresponding group without generating or registering new group keys.

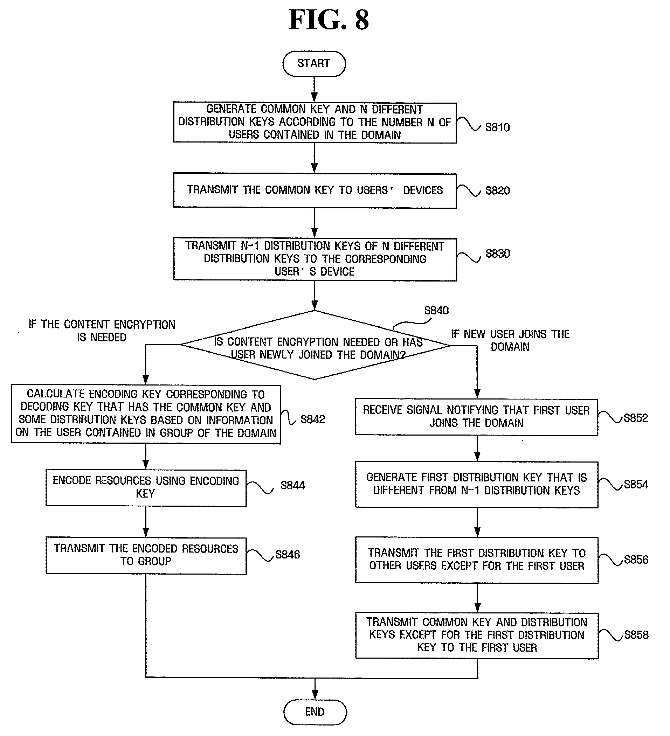

Figure 8 is a flowchart of a process of generating and distributing keys, encoding data using the distributed keys, and transmitting the encoded data according to an exemplary embodiment of the present invention.

The server managing the domain generates a common key and N different distribution keys according to the number N of users contained in the domain (S810), and the server transmits the common key to users' devices (S820). The common key is the same as $K_U$. The server transmits the distribution keys to users except for the key corresponding to each user. The server transmits N-1 distribution keys of N different distribution keys to the corresponding user's device (S830). After the above transmission, the set of N-1 distribution keys received by the corresponding user's device is different from the sets of N-1 distribution keys received by other users' devices.

The intersection of sets of users' keys defines group keys.

After transmitting keys, there are two situations where the server encodes content and transmits the encoded content, and where a new user joins the domain; the type of situation is determined (S840). If content encoding is required, the server calculates an encoding key corresponding to a decoding key that has the common key and some distribution keys based on information on the user contained in a group of the domain (S842). Some distribution keys refer to keys included the intersection of sets of the distribution keys received (S830). As shown in Figure 5, group keys consist of the common key and distribution keys, and the group key is a decoding key that decodes content transmitted to the corresponding group. Accordingly, the encoding key corresponding to the decoding key is calculated. In the symmetrical key method, the decoding key can be used as the encoding key. In the asymmetrical key method, the decoding key and the encoding key may be obtained according to a mechanism such as the above-mentioned RSA method. The server encodes resources using the calculated encoding key (S844), and transmits the encoded resources to the group (S846). Since a device of a user contained in the group can calculate group keys or store the calculated group keys, the server can decode the received resources using the device.

If a new user joins the domain (S840), the process illustrated in Figure 7 may be performed.

The server receives a signal notifying that a first user has joined the domain (S582), and generates a first distribution key that is different from N-1 distribution keys (S584). The server generates $f_4$ in Figure 7, which is an exemplary embodiment. The server transmits the first distribution key to other users exempting the first user (S856), and transmits the common key and distribution keys, except for the first distribution key, to the first user S858.

There may be several users for each device, or several people may use one user ID.

When a user joins the domain, the user's device receives the common key and the distribution keys from the domain server (S852 and S858). By generating group keys including in the distribution keys (exempting the distribution key corresponding to other users included the group the user joins), the device can decode resources transmitted to the group.

The device can encode content using the group keys, or encode resources by calculating a decoding key corresponding to the group keys.

If groups form layers according to a correlation through the process of Figure 8, it is possible to efficiently manage keys by giving a correlation to group keys. Also, a user does not need keys of each group where the user is contained, in advance. In encoding and decoding, the corresponding group keys can be actively generated.

According to the present invention, it is possible to reduce the number of keys managed by a user in a domain.

Further, predefined topology, shared in a domain, is not required; therefore, groups can be actively generated and users can be easily added.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A method of configuring keys of user groups in a domain including N users the method comprising:

   generating a common key and N distribution keys;
   transmitting the common key to a plurality of the user devices; and

transmitting a user set of N-1 of the distribution keys to each of the plurality of user devices, wherein each user set is different from the user sets transmitted to the remaining user devices of the plurality of user devices.

2. The method of claim 1, wherein a user group comprising a plurality of user devices has a group key which is an intersection set of the user sets of the plurality of user devices in the group, and an encoding key or a decoding key generated by the common key.

3. The method of claim 1 or 2, wherein a user of the user devices has a decoding key generated by the received common key and the user set.

4. The method of any one of the preceding claims, wherein after transmitting the distribution keys, the method further comprises:

calculating an encoding key corresponding to a decoding key that comprises the common key and a subset of the N distribution keys, based on information of users in a group;
encoding resources using the encoding key; and
transmitting the encoded resources to the group.

5. The method of claim 4, wherein if symmetrical key encryption is used, the encoding key is the same as the decoding key.

6. The method of any of the preceding claims, further comprising:

receiving a signal notifying that a new user has joined the domain;
generating a new distribution key that is different to the existing distribution keys in the domain;
transmitting the new distribution key to the other users in the domain; and
transmitting the common key and the existing distribution keys to the new user.

7. The method of any one of the preceding claims, wherein the users are separate individuals for each of the user devices.

8. A method of configuring keys of groups contained in a domain, wherein there are N users in the domain, the method comprising:

receiving a common key and a user set of N-1 distribution keys from a server managing the domain;
receiving information on users of a first group having access rights in the domain; and
generating a decoding key based on the common key and a subset of the user set, wherein the subset of the user set includes at least one distribution key which is not held by each user in the domain N-1 not contained in the first group.

9. The method of claim 8, wherein there are N distribution keys, each corresponding to one of the N users, and the user set for each user includes all of the distribution keys except the distribution key corresponding to that user.

10. The method of claim 8 or 9, wherein the subset is an intersection of the user sets of the users in the first group.

11. The method of claim 8, 9 or 10, further comprising receiving a new distribution key from the server when a new user joins the domain.

12. The method of any one of claims 8 to 11, further comprising generating an encoding key corresponding to the generated decoding key.

13. The method of claim 12, wherein if a symmetrical key encryption is used, the encoding key is the same as the decoding key.

14. A computer program comprising computer readable code comprising instructions for carrying out the method according to any one of the preceding claims.

15. A computer readable medium having a computer program according to claim 14 stored thereon.

**16.** An apparatus comprising:

a key-generating unit configured to generate a common key and N distribution keys based on N users in a domain;
a key distributor configured to transmit the common key and a user set of N-1 distribution keys of the N distribution keys to each user device, such that each user set is different to each of the user sets sent to the other user devices in the domain; and
an encoder configured to calculate an encoding key corresponding to a decoding key comprising the common key and distribution keys based on information of users in a group in the domain, for encoding resources using the encoding key.

**17.** The apparatus of claim 16, wherein a user group comprising a plurality of users has an intersection of the user sets of the plurality of users, and an encoding key or decoding key generated by the common key.

**18.** The apparatus of claim 16 or 17, wherein the user has a decoding key generated based on the received common key and the user set of distribution keys.

**19.** The apparatus of claim 18, wherein if a symmetrical key encryption is used, the encoding key is the same as the decoding key.

**20.** The apparatus of any one of claims 16 to 19 wherein, if a signal notifying that a new user has joined the domain is received:

the key-generating unit generates a new distribution key different from each of the existing distribution keys in the domain; and
the key distributor is configured to transmit the new distribution key to the other users in the domain, and to transmit the common key and the existing distribution keys, without the new distribution key, to the new user.

**21.** The apparatus of any one of the claims 16 to 20, wherein the users are separate individuals for each of the user devices.

# FIG. 1

FOUR USERS

15 SUBSETS, 15 GROUPS

# FIG. 2

GRANT CORRELATION BETWEEN KEYS

# FIG. 3

200

| KEY-GENERATING UNIT (210) | | KEY DISTRIBUTOR (220) |
|---|---|---|
| ENCODER (230) | | DECODER (240) |

# FIG. 4

301 302 303 304

$K_u$, $f_2$, $f_3$, $f_4$     $K_u$, $f_1$, $f_3$, $f_4$     $K_u$, $f_1$, $f_2$, $f_4$     $K_u$, $f_1$, $f_2$, $f_3$

# FIG. 5

$\{K_u, f_2, f_3\}$

$\{K_u, f_2, f_3, f_4\} \cap \{K_u, f_1, f_2, f_3\}$

301

304

$K_u, f_2, f_3, f_4$

$K_u, f_1, f_2, f_3$

# FIG. 6

GROUP KEY OF USER 1 AND USER 4 : $K_u$, $f_2$, $f_3$

USER 1(311)

$K_u$, $f_2$, $f_3$, $f_4$

USER 4(314)

$K_u$, $f_1$, $f_2$, $f_3$

USER 1(311)

$K_u$, $f_2$, $f_3$, $f_4$

USER 2(312)

$K_u$, $f_1$, $f_3$, $f_4$

USER 3(313)

$K_u$, $f_1$, $f_2$, $f_4$

USER 4(314)

$K_u$, $f_1$, $f_2$, $f_3$

# FIG. 7

710

SERVER (200)

$K_u$, $f_1$, $f_2$, $f_3$

USER 1(321)

$K_u$, $f_2$, $f_3$

USER 2(322)

$K_u$, $f_1$, $f_3$

USER 3(323)

$K_u$, $f_1$, $f_2$

JOIN

USER 4(324)

720

SERVER (200)

$K_u$, $f_1$, $f_2$, $f_3$, $f_4$

TRANSMIT $f_4$

TRANSMIT $f_4$

TRANSMIT
$K_u$, $f_1$, $f_2$, $f_3$

TRANSMIT $f_4$

USER 1(321)

$K_u$, $f_2$, $f_3$, $f_4$

USER 2(322)

$K_u$, $f_1$, $f_3$, $f_4$

USER 3(323)

$K_u$, $f_1$, $f_2$, $f_4$

USER 4(324)

$K_u$, $f_1$, $f_2$, $f_3$

# FIG. 8

START

GENERATE COMMON KEY AND N DIFFERENT DISTRIBUTION KEYS ACCORDING TO THE NUMBER N OF USERS CONTAINED IN THE DOMAIN — S810

TRANSMIT THE COMMON KEY TO USERS' DEVICES — S820

TRANSMIT N-1 DISTRIBUTION KEYS OF N DIFFERENT DISTRIBUTION KEYS TO THE CORRESPONDING USER'S DEVICE — S830

S840

IS CONTENT ENCRYPTION NEEDED OR HAS USER NEWLY JOINED THE DOMAIN?

IF THE CONTENT ENCRYPTION IS NEEDED

IF NEW USER JOINS THE DOMAIN

CALCULATE ENCODING KEY CORRESPONDING TO DECODING KEY THAT HAS THE COMMON KEY AND SOME DISTRIBUTION KEYS BASED ON INFORMATION ON THE USER CONTAINED IN GROUP OF THE DOMAIN — S842

ENCODE RESOURCES USING ENCODING KEY — S844

TRANSMIT THE ENCODED RESOURCES TO GROUP — S846

RECEIVE SIGNAL NOTIFYING THAT FIRST USER JOINS THE DOMAIN — S852

GENERATE FIRST DISTRIBUTION KEY THAT IS DIFFERENT FROM N-1 DISTRIBUTION KEYS — S854

TRANSMIT THE FIRST DISTRIBUTION KEY TO OTHER USERS EXCEPT FOR THE FIRST USER — S856

TRANSMIT COMMON KEY AND DISTRIBUTION KEYS EXCEPT FOR THE FIRST DISTRIBUTION KEY TO THE FIRST USER — S858

END

**European Patent Office**

**EUROPEAN SEARCH REPORT**

Application Number

EP 07 10 2778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/114901 A (PHILIPS INTELLECTUAL PROPERTY [DE]; KONINKL PHILIPS ELECTRONICS NV [NL]) 1 December 2005 (2005-12-01) <br> * abstract * <br> * page 13, line 10 - page 14, line 10 * <br> * page 18, line 29 - page 20, line 9 * <br> ----- | 1-21 | INV. <br> H04L9/08 |
| X | US 2005/111668 A1 (RAIKAR AMIT [US]) 26 May 2005 (2005-05-26) <br> * paragraph [0024] - paragraph [0040] * <br> * figure 4 * <br> ----- | 1-21 | |
| X | WO 2005/079069 A (PHILIPS INTELLECTUAL PROPERTY [DE]; KONINKL PHILIPS ELECTRONICS NV [NL]) 25 August 2005 (2005-08-25) <br> * abstract * <br> * page 11, line 13 - page 12, line 27 * <br> * page 15, line 29 - page 16, line 12 * <br> * page 20, line 24 - line 28 * <br> ----- | 1-21 | |
| | | | TECHNICAL FIELDS SEARCHED (IPC) <br><br> H04L |

The present search report has been drawn up for all claims

| Place of search | Date of completion of the search | Examiner |
|---|---|---|
| Munich | 10 August 2007 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 2778

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2007

| Patent document cited in search report | | Publication date | Patent family member(s) | | Publication date |
|---|---|---|---|---|---|
| WO 2005114901 | A | 01-12-2005 | CN<br>KR | 1998180 A<br>20070015204 A | 11-07-2007<br>01-02-2007 |
| US 2005111668 | A1 | 26-05-2005 | NONE | | |
| WO 2005079069 | A | 25-08-2005 | CN<br>KR<br>US | 1918914 A<br>20060126599 A<br>2007172067 A1 | 21-02-2007<br>07-12-2006<br>26-07-2007 |

EPO FORM P0459

For more details about this annex : see Official Journal of the European Patent Office, No. 12/82